# EUROPEAN PATENT APPLICATION

(11) **EP 1 209 911 A2**
(43) Date of publication of application: **29.05.2002**
(21) Application number: 01127766.2
(22) Date of filing: 21.11.2001
(51) Int. Cl.: H04N 5/783

(54) **Encoded moving picture data conversion device and conversion method**

(30) Priority: 22.11.2000 JP 2000356120
(71) Applicant: NEC CORPORATION, Tokyo (JP)
(72) Inventor: Miyamoto, Yoshihiro, Minato-ku, Tokyo (JP)
(74) Representative: von Samson-Himmelstjerna, Friedrich R., Dipl.-Phys.

(57) **Abstract**

Disclosed is an encoded moving picture data conversion device for converting encoded moving picture data (201) compression-encoded by using inter-frame prediction, and for outputting converted data as encoded output data (203,204,206,208,210) capable of being subjected to special reproducing, the device comprising: first storage (104) for storing said inputted encoded moving picture data (201); decoding (101) for decoding said inputted encoded moving picture data (201) to decoded data (301); re-encoder (102) for re-encoding said decoded data (301) of a picture frame in a moving picture sequence, in an intra-frame encoding mode in order to generate intra-frame re-encoded data; second storage (103) for storing re-encoded data (202,205,207,209), said-re-encoded data including said intra-frame re-encoded data; and selector (105) for selecting one of said encoded moving picture data (201) stored in said first storage (104) and said re-encoded data (202,205,207,209) stored in said second storage (103) for each picture frame, and for outputting the selected data as said encoded output data (203,204,206,208,210) capable of being subjected to said special reproducing.

## Description

### Background of the Invention

### Field of the Invention:

The present invention relates to a device and a method for converting encoded moving picture data which have been obtained by compression-encoding a moving picture sequence using inter-frame prediction in order to generate new encoded moving picture data capable of being used to realize a special reproducing function such as random-access reproducing for reproducing data in the course of the sequence or high-speed reproducing.

### Description of the Prior Art:

As a method for compression-encoding a moving picture using inter-frame prediction, there are widely known IS14496-2 (MPEG-4 video) according to the ISO international standard scheme and the like. According to this encoding method, I pictures which are compression-encoded by an intra-frame processing and P pictures which are compression-encoded by an inter-frame prediction processing using a reference picture frame are appropriately combined. Here, the I pictures are randomly accessible. However, since the compression efficiency of a P picture is a few times as high as that of an I picture, all picture frames except for the I picture at the start of the sequence are normally encoded to P pictures in applications requiring high compression rate such as a videophone. In this case, however, unless the picture frames of the P pictures are sequentially decoded, beginning at the I picture at the start of the sequence, a desired picture frame in the course of the sequence cannot be decoded and reproduced. That is, it is disadvantageously difficult to perform decoding in the course of the sequence by random access. Also, even if a part of the sequence is reproduced at high speed, it is disadvantageously necessary to decode all picture frames.

As for the above-stated disadvantages, there are known methods, as conventional methods for realizing special reproducing by random access, described in Japanese Patent Application Laid-Open Publication Nos. 08-265691, 08-279979 and 09-233426.

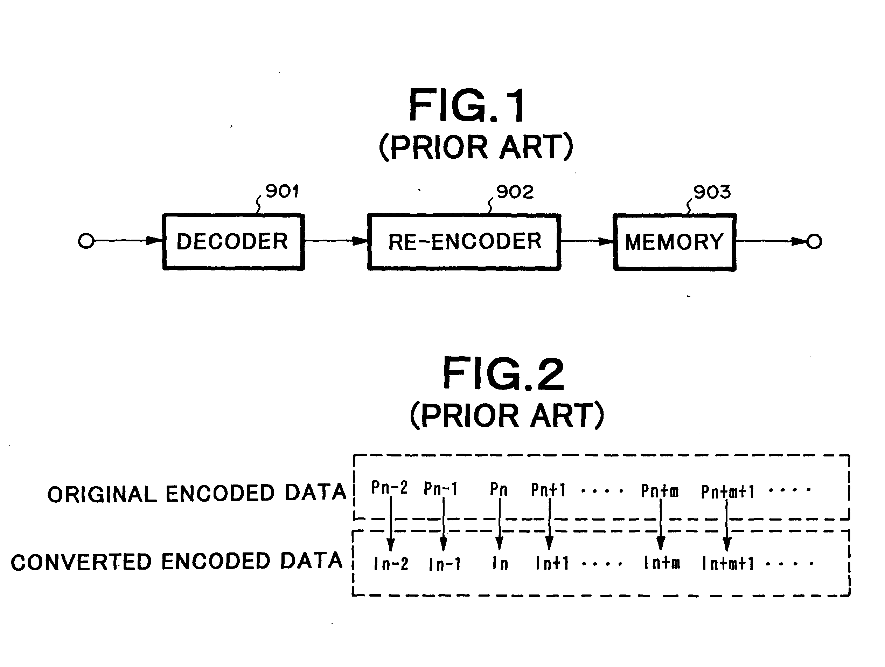

FIG. 1 is a block diagram of a device for converting encoded moving picture data which have been compression-encoded using inter-frame prediction into randomly accessible encoded data.

In FIG. 1, first, original encoded moving picture data is inputted from a communication line or a storage medium into a decoder 901. The decoder 901 decodes the original encoded moving picture data and outputs a decoded, reproduced moving picture sequence. Here, since the original encoded moving picture data is encoded using the inter-frame prediction, the decoding processing is required to start decoding the start of the encoded moving picture data or a picture frame apparently showing that the frame has been compressed by intra-frame encoding, and to sequentially decode the following picture frames. To convert the encoded moving picture data into randomly accessible encoded data, all the picture frames in the decoded moving picture sequence are compression-encoded in an intra-frame encoding mode by a re-encoder 902. The encoded data thus recompressed are stored in a memory 903 and outputted in response to an external reproducing request or the like.

A series of these conversion processings will be described with reference to FIG. 2. Almost all the picture frames of the original encoded data are P pictures encoded using the inter-frame prediction. On the other hand, all the picture frames of the encoded data outputted after the conversion processing are I pictures encoded by intra-frame encoding. In the example of FIG. 2, if the original encoded data is decoded and reproduced in the course of the sequence, e.g., from a Pn frame, the picture quality of the data is greatly degraded; however, it is possible to decode and reproduce the converted, encoded data from an arbitrary picture frame. It is noted that if the data is reproduced at high speed in the example shown in FIG. 2, the data of the picture frames are thinned out at intervals from the converted, encoded data and the data is then outputted.

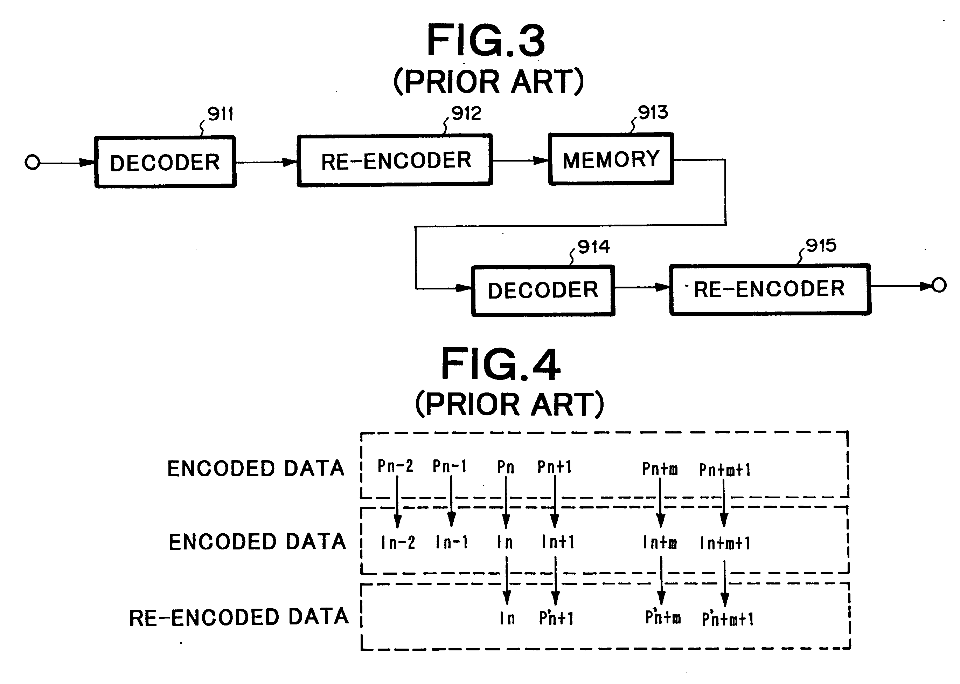

FIG. 3 shows a conventional technique described in Japanese Patent Application Laid-Open Publication No. 08-279987. In FIG. 3, differently from the configuration shown in FIG. 1, there are provided not only a decoder 911, a re-encoder 912 and the memory 913 but also a decoder 914 and a re-encoder 915 after the memory 913. A series of encoded data of a moving picture sequence stored in the memory 913 are all I pictures as in the case of FIG. 1. The encoded data or I pictures are reconverted before outputted to an external. If special reproducing by random access is requested, the first picture frame taken out in the course of the sequence is outputted as the re-encoded I picture as it is. As for a series of picture frames following the first picture frame, the decoder 914 decodes the encoded data, i.e., the I pictures, the re-encoder 914 re-encodes the decoded data to P' pictures using the inter-frame prediction and outputs the P' pictures, which manner is shown in FIG. 4. Since the P' pictures are higher in encoding efficiency than the I pictures, the quantity of codes to be outputted can be reduced by providing the re-encoder 915 after the memory 913 as shown in FIG. 3.

The disadvantage of the conventional method shown in FIG. 1 is in that the quantity of codes after conversion is increased. While all pieces of encoded data of the moving picture sequence stored in the memory 903 are I pictures, the code quantity of an I picture is several times as large as that of a P picture. Due to this, the encoded data after conversion greatly increases in quantity from the original encoded moving picture data and the capacity of the memory 903 storing the data increases, as well. In addition, if the converted, encoded data is to be transmitted through a communication line or the like, the line which is set on the premise of transmitting the original encoded data has an insufficient transmission capacity, making it disadvantageously difficult to transmit the data in real time.

According to the other conventional method shown in FIG. 3, a quantity of codes after conversion is reduced by providing the re-encoder 915 so as to solve the above-stated disadvantage. For that reason, it is possible to transmit the encoded data after conversion almost in a real time manner even through the communication line set on the premise of transmitting the original encoded data. With this method, however, an entire conversion system performs decoding and re-encoding twice, respectively, which disadvantageously pushes up operation cost. Besides, with this method, the repetition of decoding and re-encoding twice, respectively, causes compression distortions resultant from the encoding to be accumulated twice, disadvantageously, greatly degrading picture quality compared with that of the original encoded data.

### Summary of the Invention

It is, therefore, an object of the present invention to provide a method for performing a conversion processing with a smaller operation quantity when converting encoded moving picture data which have been compression-encoded using inter-frame prediction to generate new encoded moving picture data capable of being used to realize a special reproducing function such as random access or high-speed reproducing, for suppressing the increase of the quantity of codes of the encoded data after conversion, and for further suppressing the degradation of picture quality accompanying the conversion processing.

According to a first aspect of the present invention, there is provided an encoded moving picture data conversion device for converting encoded moving picture data compression-encoded by using inter-frame prediction, and for outputting converted data as encoded output data capable of being subjected to special reproducing, the device comprising: first storage means for storing the inputted encoded moving picture data; decoding means for decoding the inputted encoded moving picture data to decoded data; re-encoding means for re-encoding the decoded data of a picture frame in a moving picture sequence, in an intra-frame encoding mode in order to generate intra-frame re-encoded data; second storage means for storing re-encoded data, the re-encoded data including the intra-frame re-encoded data; and selection means for selecting one of the encoded moving picture data stored in the first storage means and the re-encoded data stored in the second storage means for each picture frame, and for outputting the selected data as the encoded output data capable of being subjected to the special reproducing.

In the above encoded moving picture data conversion device, the re-encoding means may comprise: means for re-encoding the decoded data of picture frames as many as J following after the picture frame re-encoded in the intra-frame encoding mode, by using inter-frame prediction in order to generate inter-frame re-encoded data, where J is an integer greater than zero; means for measuring a picture quality of re-encoded picture frames, the re-encoded picture frames including the intra-frame re-encoded picture frame and one or more inter-frame re-encoded picture frames; and means for controlling a value of the J in accordance with the picture quality, and the selection means may comprise means for, if selecting the intra-frame re-encoded data, also selecting the inter-frame re-encoded data of the picture frames as many as J following after the intra-frame re-encoded data.

In the above encoded moving picture data conversion device, the re-encoding means may comprise: means for skipping picture frames as many as (K-1) after the intra-frame re-encoded picture frame, where K is an integer greater than one; means for re-encoding the decoded data of a picture frame after K frames from the intra-frame re-encoded picture frame, by using inter-frame prediction with reference to the intra-frame re-encoded picture frame in order to generate inter-frame re-encoded data; means for calculating the number of frames constituted of the input encoded moving picture data corresponding to the intra-frame re-encoded data in code amount; and means for controlling a value of the K in accordance with the number of frames calculated, and the selection means may comprise means for, if selecting the intra-frame re-encoded data, skipping the frames as many as (K-1) following after the intra-frame re-encoded picture frame, and for selecting the inter-frame re-encoded data after the K frames from the intra-frame re-encoded picture frame.

In the above encoded moving picture data conversion device, the re-encoding means may comprise means for re-encoding the decoded data of frames at L-frame intervals in an intra-frame encoding mode to generate intra-frame re-encoded data, in such a way that re-encoded data in each frame occupy at least a part of the frame and re-encoded data gathered from frames as many as M cover an entire frame area, where L is an integer greater than one and M is an integer greater than one, and the selection means may comprise means for selecting only the intra-frame re-encoded data in response to a high-speed reproducing request, and for outputting the selected re-encoded data as the encoded data capable of being subjected to the special reproducing.

According to a second aspect of the present invention, there is provided an encoded moving picture data conversion method for converting encoded moving picture data compression-encoded by using inter-frame prediction, and for outputting converted data as encoded output data capable of being subjected to special reproducing, the method comprising: a first storage step of storing the inputted encoded moving picture data; a decoding step of decoding the inputted encoded moving picture data to decoded data; a re-encoding step of re-encoding the decoded data of a picture frame in a moving picture sequence, in an intra-frame encoding mode in order to generate intra-frame re-encoded data; a second storage step of storing re-encoded data, the re-encoded data including the intra-frame re-encoded data; and a selection step of selecting one of the encoded moving picture data stored in the first storage step and the re-encoded data stored in the second storage step for each picture frame, and for outputting the selected data as the encoded output data capable of being subjected to the special reproducing.

In the above encoded moving picture data conversion method, the re-encoding step may comprise: a step of re-encoding the decoded data of picture frames as many as J following after the picture frame re-encoded in the intra-frame encoding mode, by using inter-frame prediction in order to generate inter-frame re-encoded data, where J is an integer greater than zero; a step of measuring a picture quality of re-encoded picture frames, the re-encoded picture frames including the intra-frame re-encoded picture frame and one or more inter-frame re-encoded picture frames; and a step of controlling a value of the J in accordance with the picture quality, and the selection step may comprise a step of, if selecting the intra-frame re-encoded data, also selecting the inter-frame re-encoded data of the picture frames as many as J following after the intra-frame re-encoded data.

In the above encoded moving picture data conversion method, the re-encoding step may comprise: a step of skipping picture frames as many as (K-1) after the intra-frame re-encoded picture frame, where K is an integer greater than one; a step of re-encoding the decoded data of a picture frame after K frames from the intra-frame re-encoded picture frame, by using inter-frame prediction with reference to the intra-frame re-encoded picture frame in order to generate inter-frame re-encoded data; a step of calculating the number of frames constituted of the input encoded moving picture data corresponding to the intra-frame re-encoded data in code amount; and a step of for controlling a value of the K in accordance with the number of frames calculated, and the selection step may comprise a step of, if selecting the intra-frame re-encoded data, skipping the frames as many as (K-1) following after the intra-frame re-encoded picture frame, and for selecting the inter-frame re-encoded data after the K frames from the intra-frame re-encoded picture frame.

In the above encoded moving picture data conversion method, the re-encoding step may comprise a step for re-encoding the decoded data of frames at L-frame intervals in an intra-frame encoding mode to generate intra-frame re-encoded data, in such a way that re-encoded data in each frame occupy at least a part of the frame and re-encoded data gathered from frames as many as M cover an entire frame area, where L is an integer greater than one and M is an integer greater than one, and the selection step may comprise a step of selecting only the intra-frame re-encoded data in response to a high-speed reproducing request, and for outputting the selected re-encoded data as the encoded data capable of being subjected to the special reproducing.

### Brief Description of the Drawings

FIG. 1 is a block diagram showing an encoded moving picture data conversion device according to the first conventional example;
FIG. 2 is the first explanatory view for the generation of encoded data for special reproducing in a conventional method;
FIG. 3 is a block diagram showing an encoded moving picture data conversion device according to the second conventional example;
FIG. 4 is the second explanatory view for the generation of encoded data for special reproducing in a conventional method.
FIG. 5 is an explanatory view for the first synthetic encoded data generated by an encoded moving picture data conversion device in the first embodiment according to the present invention;
FIG. 6 is an explanatory view for the second synthetic encoded data generated by the encoded moving picture data conversion device in the first embodiment according to the present invention;
FIG. 7 is an explanatory view for synthetic encoded data generated by an encoded moving picture data conversion device in the second embodiment according to the present invention;
FIG. 8 is an explanatory view for synthetic encoded data generated by an encoded moving picture data conversion device in the third embodiment according to the present invention;
FIG. 9 is the first explanatory view for high-speed reproducing encoding data generated by an encoded moving picture data conversion device in the fourth embodiment according to the present invention;
FIG. 10 is the second explanatory view for high-speed reproducing encoding data generated by the encoded moving picture data conversion device in the fourth embodiment'according to the present invention;
FIG. 11 is a block diagram showing the encoded moving picture data conversion device in the first embodiment according to the present invention;
FIG. 12 is a block diagram showing the encoded moving picture data conversion device in the second embodiment according to the present invention;
FIG. 13 is a block diagram showing the encoded moving picture data conversion device in the third embodiment according to the present invention; and
FIG. 14 is a block diagram showing the encoded moving picture data conversion device in the fourth embodiment according to the present invention;

### Description of the Preferred Embodiments

The embodiments of the present invention will be described hereinafter with reference to the accompanying drawings.

According to the present invention, at least a part of original encoded moving picture data which have been compression-encoded using inter-frame prediction is re-encoded in an intra-frame encoding mode, the re-encoded data of a picture frame necessary for special reproducing, such as random access or high-speed reproducing, is fetched from the re-encoded data if a decoding and reproducing request using the special reproducing is issued for the encoded moving picture data, the encoded data of the corresponding picture frame part in the original encoded moving picture data is replaced by the fetched re-encoded data, and encoded moving picture data capable of being subjected to desired special reproducing is thereby provided.

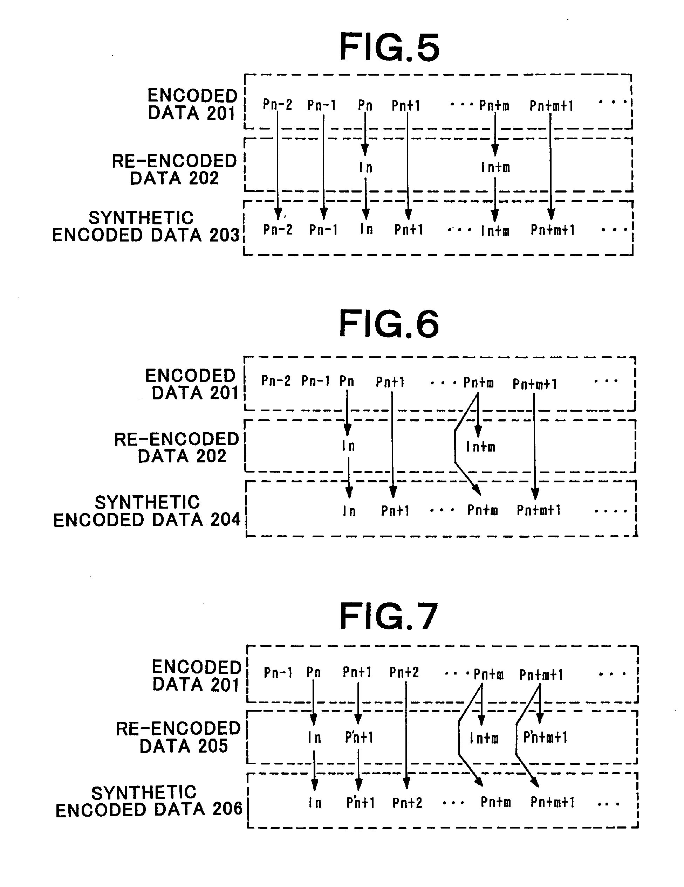

Next, an encoded moving picture data conversion method in one embodiment of the present invention will be described with reference to FIGS. 5 to 10.

FIGS. 5 to 10 show examples of original encoded data, the generation of re-encoded data corresponding to the original encoded data and the construction of new encoded data generated by selecting the encoded data for each picture frame and capable of being subjected to special reproducing, respectively.

In FIG. 5, original encoded data 201 is re-encoded to I pictures at preset m-frame intervals to thereby generate re-encoded data 202, and the I pictures replace the corresponding picture frame parts on the original encoded data, respectively to thereby generate new synthetic encoded data 203. Since the I pictures are inserted at the certain intervals, the synthetic encoded data 203 shown in FIG. 5 is randomly accessible encoded data with an appropriate I picture set as a decoding start point.

In FIG. 6, the same re-encoded data 202 as those shown in FIG. 5 are generated, but outputted synthetic encoded data 204 differs in configuration from the synthetic encoded data 203 shown in FIG. 5. FIG. 6 shows the generation pattern of the synthetic encoded data 204 to be outputted if there is a request to start decoding by random access, beginning at the n-th frame or a picture frame in the vicinity of the n-th frame. In FIG. 6, the original encoded data 201 are re-encoded to I pictures at m-frame intervals to thereby generate re-encoded data 202 in advance. However, almost all the I pictures are not selected but only the I picture in the n-th frame designated as a decoding start point is selected from the re-encoded data 202 and the original encoded data 201 is selected for the following picture frames and synthesized with the selected I picture. In this case, if the I picture in the n-th frame can be normally decoded, picture frames starting at the (n+1) th frame can be sequentially decoded using the inter-frame prediction. Due to this, there is no need to replace all the respective corresponding picture frames in the original encoded data by the I pictures each having large a quantity of codes except for the I picture at the decoding start point.

FIG. 7 shows one example of suppressing the degradation of the picture quality of picture frames re-encoded by combining I pictures with P pictures to generate re-encoded data 205. As already stated above, the quantity of codes of each I picture in the re-encoded data 205 is far larger than that of a P picture in the original encoded data 201. Due to this, if the quantity of codes of each I pictures is suppressed, the picture quality of the I pictures is often degraded from that of the original encoded data. The degradation of the I pictures cannot be sufficiently compensated by the following P pictures synthesized from the original encoded data 201. As a result, the degradation of the picture quality often remains for a long time. Therefore, if the picture quality of each I picture is degraded, a few frames right after the I picture are re-encoded as P' pictures using frame prediction so as to make the degradation thereof less conspicuous. The P' pictures obtained by re-encoding are stored in a memory while combining the P' pictures with the I picture. Here, while the P' pictures in the re-encoded data 205 are encoded picture frames using the frame prediction as in the case of the P pictures in the original encoded data 201, the P' pictures are obtained by re-encoding using each I picture as a reference picture and different from the P pictures in each pixel value. Due to this, the picture frames are denoted by P' pictures for discrimination purposes. If the encoded data in the n-th frame is replaced by an I picture in the re-encoded data 205 for random-access reproducing, the encoded data in a frame right after the I picture is simultaneously replaced by a P' picture and synthetic re-encoded data 206 is generated. By doing so, it is possible to improve the degradation of the picture quality due to the replacement of a part of the original encoded data 201 by the re-encoded data 205 at an earlier stage. It is also possible to advantageously avoid extremely increasing the quantity of codes of I pictures. It is noted that the number J of P' pictures right after the I picture obtained by re-encoding may be plural. The value of J may be determined based on the evaluation of the degradation of the picture qualities of the I picture and P' picture. If the degradation of the picture quality due to the I picture is large, the number J may be set large. By replacing P pictures by P' pictures over a plurality of frame periods, it is possible to slowly recover the picture quality.

In the example shown in FIG. 7, the synthetic re-encoded data 206 is generated without replacing a (Pn+m) picture by an (In+m) picture as in the case of the example shown in FIG. 6. Alternatively, encoded data corresponding to the synthetic re-encoded data 206 may be generated by replacing the (Pn+m) picture by the (In+m) picture prepared in the re-encoded data 205 as in the case of FIG. 5. In the latter case, a (Pn+m+1) picture is also replaced by a (P'n+m+1) picture prepared in the re-encoded data 205 in advance, thereby generating the encoded data corresponding to the synthetic encoded data 206.

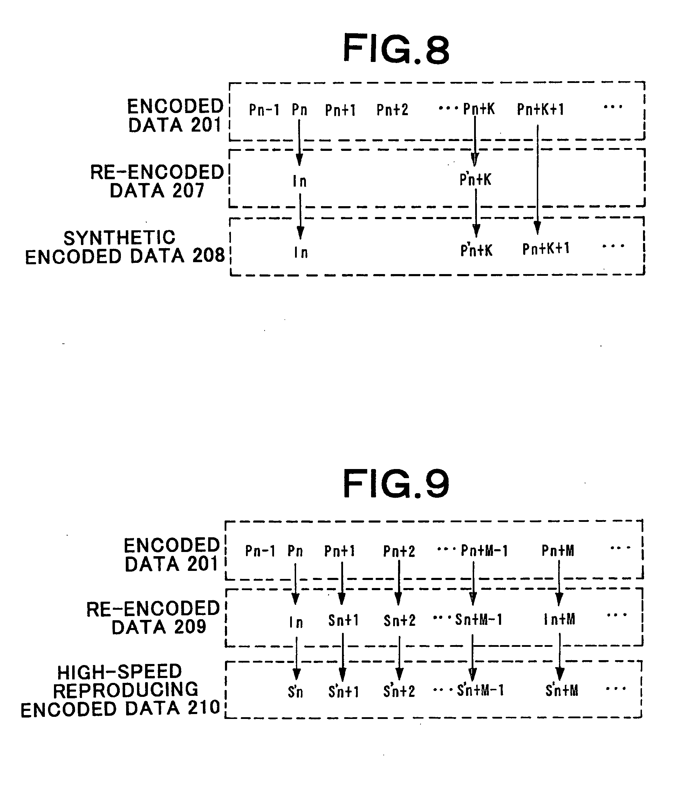

FIG. 8 is an explanatory view for a method for compensating the increase of a quantity of codes due to I pictures by frame skipping on re-encoded data 207. If a certain picture frame is re-encoded to an I picture, the quantity of codes of the I picture greatly increases from that of the corresponding frame of the original encoded data 201. Due to this, if the I picture replaces the original encoded data, the entire code quantity of the data increases. Besides, the quantity of codes is biased to the I picture. If data is transmitted in real time over a communication line having a fixed capacity, a problem may possibly occur. Considering this, as shown in FIG. 8, (K-1) frames right after each I picture are skipped and a picture frame away from the I picture by K frames is encoded to a P' picture using inter-frame prediction while referring to the I picture. Here, the number K of skipped frames is controlled so that the quantity of codes of an I picture replacing a certain picture frame of the original encoded data and the entire quantity of codes of the original encoded data 201 from the n-th frame to (n+K-1) th frame almost cancel each other. As a result, synthetic encoded data 208 eventually outputted becomes almost equal in quantity of codes to the original encoded data 201. By so controlling re-encoding, even the line capacity set on the premise of transmitting the original encoded data 201 can transmit the newly generated synthetic encoded data 208 without increased transmission delay. Further, the number of P' pictures is not necessarily limited to one but, as already described above with reference to FIG. 7, P' pictures as many as J may be re-encoded to make it possible to compensate the degradation of the picture quality due to the replacement of the picture frames in the original encoded data by the I picture.

By utilizing the re-encoded data described with reference to FIGS. 5 to 8, it is possible to realize high-speed reproducing. For example, it suffices that only the I picture in the synthetic encoded data 203, 204, 206 or 208 generated in any one of the patterns shown in FIGS. 5 to 8 is picked up and outputted as encoded data for high speed reproducing. If the picture frames are re-encoded to I pictures at m-frame intervals, it is possible to realize m-time high-speed reproducing by decoding all the I pictures in real time. In addition, if not all the I pictures thus picked up are decoded and reproduced but a part of the I pictures are decoded and reproduced at intervals, it is possible to realize high speed reproducing at a speed of a multiple of m.

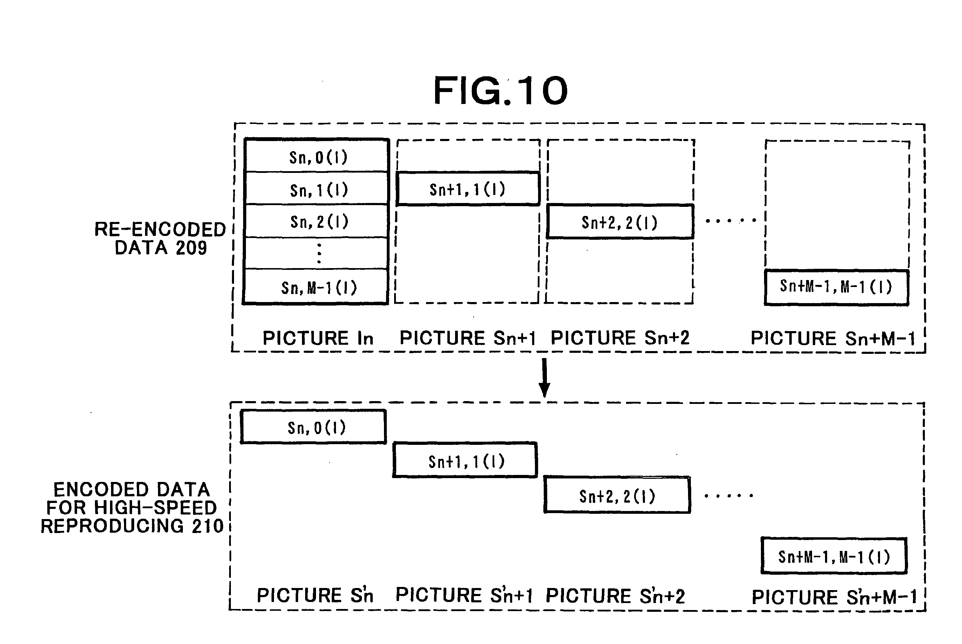

Meanwhile, if high-speed reproducing is performed based on the re-encoded data shown in FIGS. 5 to 8, only the picture frames of the I pictures are reproduced at intervals. As a result, reproduced pictures, which are generated out of discontinuous frames at intervals, often appear unnatural. To prevent this, FIGS. 9 and 10 show one example of constructing re-encoded data 209 enabling the motion of the pictures to appear smooth and natural during high-speed reproducing.

FIG. 9 is the same as FIGS. 5 to 8 in that I pictures are set at certain intervals but different in that a part of arbitrary picture frames excluding the I pictures are also re-encoded to S pictures in an intra-frame encoding mode. Accordingly, the re-encoded data 209 includes I pictures and S pictures. FIG. 10 shows one example of the intra-frame encoding pattern of the interior of each S picture and one example of the construction of encoded data 210 for high-speed reproducing based on the intra-frame encoding pattern. The encoded data 210 for high-speed reproducing is constituted out of intra-frame encoded parts in the S pictures of the encoded data 209 and parts in the I pictures of the encoded data 209 which have a predetermined positional relationship with the intra-frame encoded parts in the S pictures.

Referring to FIG. 10, in the high-speed reproducing encoded data 210, the intra-frame encoded parts are set to be sequentially scanned from the top to the bottom of a picture plane in view of realizing high-speed reproducing in the order of frames. That is, if continuous M pieces of S' pictures in the high-speed reproducing encoded data 210 are synthesized, one picture frame can be constructed.

While the I pictures for random access are obtained by encoding the entire pictures in the intra-frame encoding mode, it is not necessary to read the entire I picture during high-speed reproducing. Instead, only a part of each I picture associated, in time, with the S pictures before and after the I picture may be read while considering the positions of the encoded parts of the S pictures before and after the I picture.

Further, while FIG. 9 shows an example of encoding all frames except for the I pictures to S pictures, the S pictures may be provided at L-frame intervals. If the value of the L is set to be an integer equal to or greater than 1, the encoded data for high speed reproducing to be reconstructed is further set to have an L-time speed.

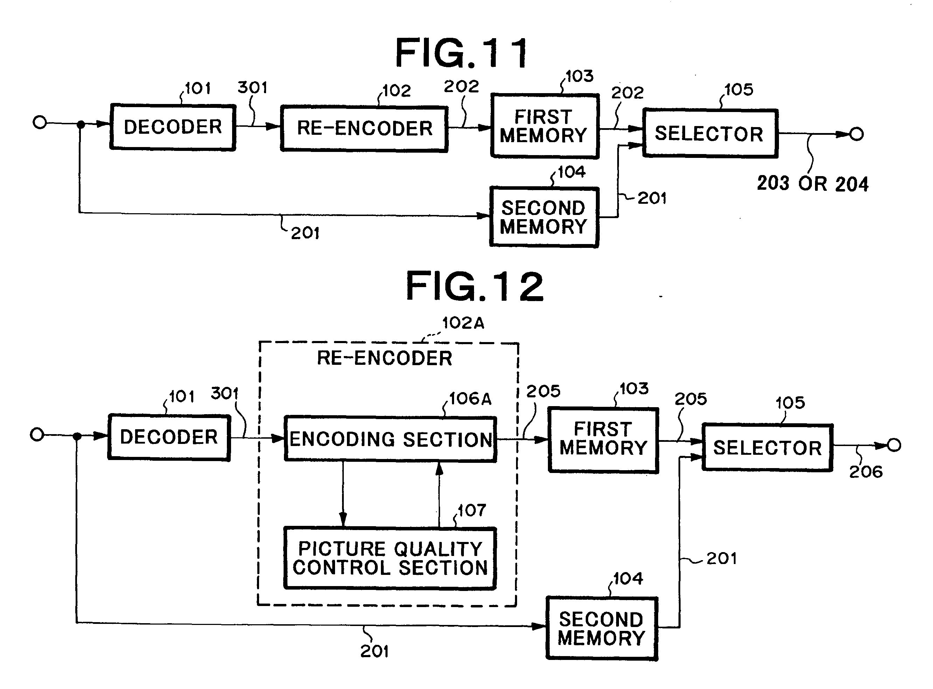

Next, description will be given to the configuration of an encoded moving picture data conversion device and the operation thereof in an embodiment according to the present invention so as to realize the encoded moving picture data conversion methods in the above-stated embodiments of the present invention, with reference to FIGS. 11 to 14.

FIG. 11 shows an encoded moving picture data conversion device in the first embodiment. The conversion device includes a decoder 101, a re-encoder 102, a first memory 103, a second memory 104 and a selector 105.

Referring to FIG. 11, the decoder 101 decodes encoded data 201 as original encoded moving picture data which have been compression-encoded using inter-frame prediction, and outputs decoded data 301. The second memory 104 inputs and stores the encoded data 201. The re-encoder 102 inputs the decoded data 301, re-encodes a part of picture frames to I pictures by an intra-frame processing, and outputs re-encoded data 202. The first memory 103 inputs and stores the re-encoded data 202.

Picture frames to be re-encoded may be determined at preset intervals or according to an external designation. As shown in FIG. 5, for example, I pictures may be generated at m-frame intervals.

If an external request for special reproducing is issued after the re-encoded data is stored in the first memory 103 and the encoded data 201 is stored in the second memory, the selector 105 appropriately switches the re-encoded data 202 stored in the first memory 103 or the encoded data 201 stored in the second memory 104 and reads the switched data, thereby outputting synthetic encoded data 203 or 204.

If the synthetic encoded data 203 shown in FIG. 5 is to be obtained from the output terminal of the selector 105, the selector 105 reads the re-encoded data from the first memory 103 for all the re-encoded picture frames. The synthetic encoded data 203 thus generated includes many I pictures, so that random-access reproducing can be easily realized.

If the synthetic encoded data 204 shown in FIG. 6 is to be obtained from the output terminal of the selector 105 and, for example, there is a random access reproducing request, then the selector 105 reads only the I picture in the re-encoded data closest to a picture frame at a decoding start point from the first memory 103 and reads the encoded data 201 from the second memory 104 for the remaining frames. In this case, since the I picture having a large quantity of codes is only the initial picture frame, it is possible to suppress the increase of an overall quantity of codes. If a random access reproducing request is issued particularly from a decoding and reproducing terminal in a remote place, it is appropriate to transmit the synthetic encoded data 204 so as to minimize the quantity of codes to be transmitted. This is because only one I picture in the corresponding frame may be transmitted and the P pictures may be transmitted for the remaining frames.

FIG. 12 shows an encoded moving picture data conversion device in the second embodiment. The conversion device includes a decoder 101, a re-encoder 102A, a first memory 103, a second memory 104 and a selector 105. Also, the re-encoder 102A includes an encoding section 106A and a picture quality control section 107.

The encoding section 106A inputs decoded data 301 from the decoder 101, re-encodes a part of picture frames to I pictures by an intra-frame processing, re-encodes another part of picture frames to P' pictures by an inter-frame processing, and outputs a re-encoding result, as re-encoded data 205, to the first memory 103.

The picture quality control section 107 measures the degradation of the picture quality of the picture frames re-encoded as the I pictures by the encoding section 106A. The degradation of the picture quality mentioned herein means the degradation degree of the picture quality after the decoded pictures outputted from the decoder 101 are re-encoded with reference to the picture quality of the decoded picture outputted from the decoder 101. The picture quality control section 107 controls the encoding section 106 to re-encode a picture frame next to an I picture as a P' picture if the degradation degree of the picture quality of the I picture is larger than a preset threshold value. The encoding section 106A performs re-encoding using the inter-frame prediction with reference to a picture frame right before the encoded frame as a reference picture to obtain the P' picture. Only one P' picture may be inserted right after the I picture. Alternatively, if the picture quality control section 107 measures not only the degradation of the picture quality of the I picture but also that of the P' picture and the degradation degree of the picture quality of the P' picture is larger than the threshold value, then a picture frame away from the I picture by two frames may be re-encoded to a P' picture. Thereafter, until the degradation degree of the following P' pictures becomes smaller than the threshold value, the re-encoding of the next picture frames to the P' pictures is repeated and P' pictures as many as J (where J is an integer equal to or greater than 0) are eventually obtained as re-encoded data 205. A series of pieces of re-encoded data 205 thus obtained are stored in the first memory 103.

Next, to obtain the synthetic encoded data 206 shown in FIG. 7 from the output terminal of the selector 105, the selector 105 reads the re-encoded data 205 of an I picture at a decoding start point and the following P' pictures as many as J at the time of the issuance of a random access reproducing request from the first memory 103, and reads the encoded data 201 for the remaining frames from the second memory 140. By doing so, even if the degradation of the picture quality occurs to the synthetic encoded data 206 due to the I picture replacing the picture frame in the original encoded data, it is possible to swiftly recover the picture quality by the following P' pictures.

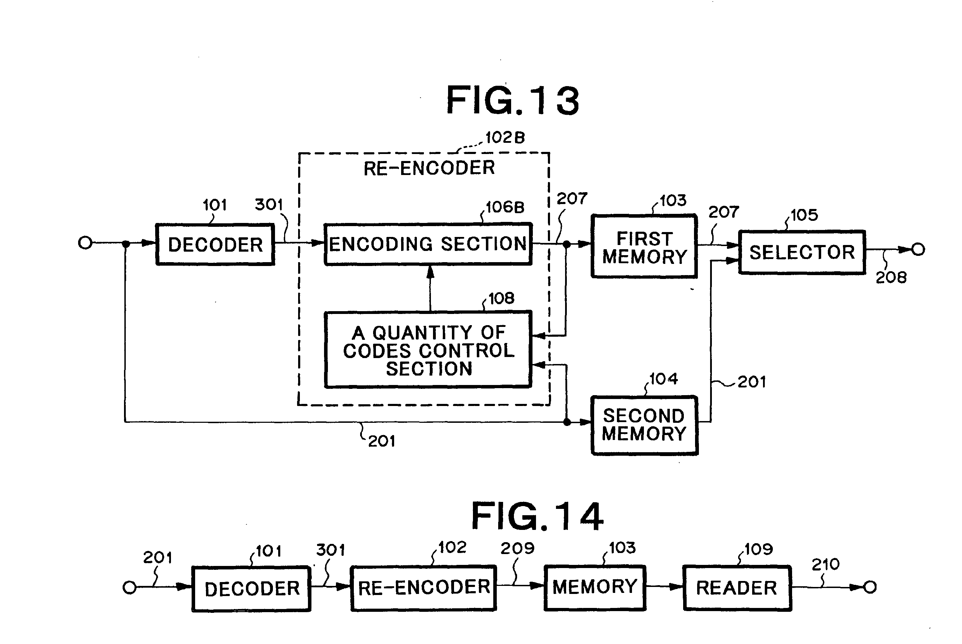

FIG. 13 shows an encoded moving picture data conversion device in the third embodiment. The conversion device includes a decoder 101, a re-encoder 102B, a first memory 103, a second memory 104 and a selector 105. Also, the re-encoder 102B includes an encoding section 106B and a code quantity control section 108.

The encoding section 106B inputs decoded data 301 from the decoder 101, re-encodes a part of picture frames to I-pictures by an intra-frame processing, and outputs the re-encoding result, as re-encoded data 207, to the first memory 103.

The code quantity control section 108 inputs the re-encoded data 207 and measure the quantity of codes B(In) of the picture frames re-encoded to I pictures by the encoding section 106B. Also, the code quantity control section 108 inputs the encoded data 201 and measures the original quantity of codes B(Pn) of the I pictures re-encoded. The code quantity control section 108 then measures an increase of the B(In) from the B(Pn). If the increase is larger than a preset threshold value, the code quantity control section 108 determines a frame period corresponding to the quantity of codes B(In) on the encoded data 201. This frame period is assumed as K. If so, the encoding section 106B skips (K-1) frames after the I picture and re-encodes a picture frame after K frames as a P' picture using the inter-frame prediction.

Next, to obtain the synthetic encoded data 208 shown in FIG. 8 from the output terminal of the selector 105, the selector 105 reads an I picture (In picture) in a picture frame at a decoding start point from the first memory 103 in response to a random access reproducing request. Then, the selector 105 skips (K- 1) frames after the I picture and reads a re-encoded P' picture (P'n+k) from the first memory 103. Thereafter, the selector 105 reads a (Pn+k+1) picture in the encoded data 201 from the second memory 104. Since this synthetic encoded data 208 is almost equal in data quantity to the original encoded data 101 as a whole, the synthetic encoded data 208 is suited for real-time data transmission using a communication line.

FIG. 14 shows an encoded moving picture data conversion device in the fourth embodiment. The conversion device includes a decoder 101, a re-encoder 102, a memory 103 and a reader 109.

Referring to FIG. 14, the decoder 101 decodes encoded data 201 which serves as original encoded moving picture data which are compression-encoded using the inter-frame prediction, and outputs decoded data 301. The re-encoder 102 inputs the decoded data 302, re-encodes frames every preset period to I pictures, re-encodes the other frames to S pictures, and outputs re-encoded data 209 consisting of the I pictures and the S pictures to the memory 103. The memory 103 inputs and stores the re-encoded data 209. The reader 109 reads parts of the I pictures having a predetermined orderly relationship with the encoded parts of the S pictures and the encoded parts of the S pictures from the memory 103, and outputs the read parts as high-speed reproducing encoded data 210.

Referring to FIG. 10 showing one example of the intra-frame processing pattern by the re-encoder 102, each picture frame is divided into M block slices S and one of the M block slices S is re-encoded as S(I) for each picture frame. In addition, the position of S(I) is shifted by one from that in the next frame from the top to the bottom of pictures in the order of frames, thereby setting the re-encoded slices S(I)'s to cover the entire picture in an M-frame period. It is not necessary to re-encode the block slices other than the intra-frame encoded slices S(I). If there is a high-speed reproducing request, the reader 109 reads the re-encoded data S(I) in each picture frame of the re-encoded data 209 and outputs only the re-encoded data thus read as the encoded data for high-speed reproducing. At this moment, as shown in FIG. 10, only one slice block may be read from each I picture so that the position of the slice S(I) in the picture frame becomes continuous to that of the slice S(I) in the adjacent frame.

It is also possible to switch the synthetic encoded data 203 or 204 to/from the high-speed reproducing encoded data 210 and to output the switched encoded data using the encoded moving picture data conversion device in the first embodiment shown in FIG. 11.

In this case, if there is a high-speed reproducing request, the selector 105 operates similarly to the reader 109. If there is a random-access reproducing request, the selector 105 operates as usual.

As stated so far, the present invention can exhibit advantages as follows.

The first effect of the present invention is that if encoded data capable of being subjected to special reproducing is to be generated from the original encoded moving picture data, an operation quantity can be made smaller and the entire code quantity of the re-encoded data can be suppressed for the following reason. By re-encoding a minimum number of picture frames or only a part of picture frames necessary for special reproducing, it is possible to flexibly generate targeted encoded data.

The second effect of the present invention is that it is possible to suppress the degradation of the picture quality of the encoded data to be subjected to special reproducing for the following reason. By re-encoding only a minimum number of picture frames or only a part of picture frames necessary for special reproducing, the accumulation of encoding errors accompanying re-encoding is small. In addition, even if the degradation of the picture quality of the picture frame at a decoding start point for random-access reproducing occurs, it is possible to swiftly improve the degraded picture quality by the following re-encoded frames.

## Claims

1. An encoded moving picture data conversion device for converting encoded moving picture data (201) compression-encoded by using inter-frame prediction, and for outputting converted data as encoded output data (203, 204, 206, 208, 210) capable of being subjected to special reproducing, the device comprising:
first storage means (104) for storing said inputted encoded moving picture data (201);
decoding means (101) for decoding said inputted encoded moving picture data (201) to decoded data (301);
re-encoding means (102) for re-encoding said decoded data (301) of a picture frame in a moving picture sequence, in an intra-frame encoding mode in order to generate intra-frame re-encoded data;
second storage means (103) for storing re-encoded data (202, 205, 207, 209), said re-encoded data including said intra-frame re-encoded data; and
selection means (105) for selecting one of said encoded moving picture data (201) stored in said first storage means (104) and said re-encoded data (202, 205, 207, 209) stored in said second storage means (103) for each picture frame, and for outputting the selected data as said encoded output data (203, 204, 206, 208, 210) capable of being subjected to said special reproducing.

2. The encoded moving picture data conversion device according to claim 1,
wherein said re-encoding means (102) comprises:
means (106) for re-encoding said decoded data (301) of picture frames as many as J following after the picture frame re-encoded in the intra-frame encoding mode, by using inter-frame prediction in order to generate inter-frame re-encoded data, where J is an integer greater than zero;
means (107) for measuring a picture quality of re-encoded picture frames, said re-encoded picture frames including the intra-frame re-encoded picture frame and one or more inter-frame re-encoded picture frames; and
means for controlling a value of said J in accordance with said picture quality, and
wherein said selection means (105) comprises means for, if selecting said intra-frame re-encoded data, also selecting said inter-frame re-encoded data of the picture frames as many as J following after said intra-frame re-encoded data.

3. The encoded moving picture data conversion device according to claim 1,
wherein said re-encoding means (102) comprises:
means for skipping picture frames as many as (K-1) after the intra-frame re-encoded picture frame, where K is an integer greater than one;
means (106) for re-encoding said decoded data of a picture frame after K frames from said intra-frame re-encoded picture frame, by using inter-frame prediction with reference to said intra-frame re-encoded picture frame in order to generate inter-frame re-encoded data;
means for calculating the number of frames constituted of said input encoded moving picture data corresponding to said intra-frame re-encoded data in code amount; and
means (108) for controlling a value of said K in accordance with the number of frames calculated, and
wherein said selection means (105) comprises means for, if selecting said intra-frame re-encoded data, skipping the frames as many as (K-1) following after said intra-frame re-encoded picture frame, and for selecting said inter-frame re-encoded data after the K frames from said intra-frame re-encoded picture frame.

4. The encoded moving picture data conversion device according to claim 1,
wherein said re-encoding means (102) comprises means (106) for re-encoding said decoded data of frames at L-frame intervals in an intra-frame encoding mode to generate intra-frame re-encoded data, in such a way that re-encoded data in each frame occupy at least a part of the frame and re-encoded data gathered from frames as many as M cover an entire frame area, where L is an integer greater than one and M is an integer greater than one, and
wherein said selection means (105) comprises means for selecting only said intra-frame re-encoded data in response to a high-speed reproducing request, and for outputting said selected re-encoded data as said encoded data (203, 204, 206, 208, 210) capable of being subjected to said special reproducing.

5. An encoded moving picture data conversion method for converting encoded moving picture data (201) compression-encoded by using inter-frame prediction, and for outputting converted data as encoded output data (203, 204, 206, 208, 210) capable of being subjected to special reproducing, the method comprising:
a first storage step of storing said inputted encoded moving picture data (201);
a decoding step of decoding said inputted encoded moving picture data (201) to decoded data (301);
a re-encoding step of re-encoding said decoded data (301) of a picture frame in a moving picture sequence, in an intra-frame encoding mode in order to generate intra-frame re-encoded data;
a second storage step of storing re-encoded data (202, 205, 207, 209), said re-encoded data including said intra-frame re-encoded data; and
a selection step of selecting one of said encoded moving picture data (201) stored in said first storage step and said re-encoded data (202, 205, 207, 209) stored in said second storage step for each picture frame, and for outputting the selected data as said encoded output data (203, 204, 206, 208, 210) capable of being subjected to said special reproducing.

6. The encoded moving picture data conversion method according to claim 5,
wherein said re-encoding step comprises:
a step of re-encoding said decoded data (301) of picture frames as many as J following after the picture frame re-encoded in the intra-frame encoding mode, by using inter-frame prediction in order to generate inter-frame re-encoded data, where J is an integer greater than zero;
a step of measuring a picture quality of re-encoded picture frames, said re-encoded picture frames including the intra-frame re-encoded picture frame and one or more inter-frame re-encoded picture frames; and
a step of controlling a value of said J in accordance with said picture quality, and
wherein said selection step comprises a step of, if selecting said intra-frame re-encoded data, also selecting said inter-frame re-encoded data of the picture frames as many as J following after said intra-frame re-encoded data.

7. The encoded moving picture data conversion method according to claim 5,
wherein said re-encoding step comprises:
a step of skipping picture frames as many as (K-1) after the intra-frame re-encoded picture frame, where K is an integer greater than one;
a step of re-encoding said decoded data (301) of a picture frame after K frames from said intra-frame re-encoded picture frame, by using inter-frame prediction with reference to said intra-frame re-encoded picture frame in order to generate inter-frame re-encoded data;
a step of calculating the number of frames constituted of said input encoded moving picture data corresponding to said intra-frame re-encoded data in code amount; and
a step of for controlling a value of said K in accordance with the number of frames calculated, and
wherein said selection step comprises a step of, if selecting said intra-frame re-encoded data, skipping the frames as many as (K-1) following after said intra-frame re-encoded picture frame, and for selecting said inter-frame re-encoded data after the K frames from said intra-frame re-encoded picture frame.

8. The encoded moving picture data conversion method according to claim 5,
wherein said re-encoding step comprises a step for re-encoding said decoded data (301) of frames at L-frame intervals in an intra-frame encoding mode to generate intra-frame re-encoded data, in such a way that re-encoded data in each frame occupy at least a part of the frame and re-encoded data gathered from frames as many as M cover an entire frame area, where L is an integer greater than one and M is an integer greater than one, and
wherein said selection step comprises a step of selecting only said intra-frame re-encoded data in response to a high-speed reproducing request, and for outputting said selected re-encoded data as said encoded data (203, 204, 206, 208, 210) capable of being subjected to said special reproducing.
